## Europäisches Patentamt

## European Patent Office

## Office européen des brevets

(19)

(11) Numéro de publication: **0 171 299**

**B1**

(12) # FASCICULE DE BREVET EUROPÉEN

(45) Date de publication du fascicule du brevet: **21.09.88**

(51) Int. Cl.⁴: **G 02 B 6/44**

(21) Numéro de dépôt: **85401058.4**

(22) Date de dépôt: **29.05.85**

(54) **Roue de tirage pour la fabrication des câbles optiques.**

(30) Priorité: **30.05.84 FR 8408531**

(43) Date de publication de la demande:
**12.02.86 Bulletin 86/7**

(45) Mention de la délivrance du brevet:
**21.09.88 Bulletin 88/38**

(84) Etats contractants désignés:
**BE CH DE GB IT LI NL SE**

(56) Documents cité:
**GB-A-1 576 339**

**PROCEEDINGS OF THE 27th INT. WIRE AND CABLE SYMPOSIUM, volume 27, 1978, pages 404-410, T.S. SWIECICKI et al.: "Unit core cable structures for optical communication systems"**
**IDEM**

(73) Titulaire: **SOCIETE ANONYME DE TELECOMMUNICATIONS, 41, rue Cantagrel, F-75624 Paris Cedex 13 (FR)**
Titulaire: **SOCIETE INDUSTRIELLE DE LIAISONS ELECTRIQUES - SILEC, 64bis, rue de Monceau, F-75008 Paris (FR)**

(72) Inventeur: **Missout, Bernard Michel, 41, rue Cantagrel, F-75631 Paris Cedex 13 (FR)**
Inventeur: **Michaux, Jean-Pierre, 41, rue Cantagrel, F-75631 Paris Cedex 13 (FR)**
Inventeur: **Piova, Jean-Luc, 41, rue Cantagrel, F-75631 Paris Cedex 13 (FR)**

(74) Mandataire: **Martinet & Lapoux, 62, rue des Mathurins, F-75008 Paris (FR)**

**Description**

La présente invention concerne principalement une roue de tirage d'un jonc pourvu de rainures hélicoïdales contenant chacune au moins une fibre optique, et défilant dans une ligne de câblage à fibres optiques telle que définie dans le préambule de la revendication 1.

Une telle roue de tirage est disposée avant la sortie de la ligne de câblage dans laquelle des fibres optiques sont logées automatiquement dans les rainures hélicoïdales du jonc. La roue de tirage est destinée à exercer une traction sur le jonc pendant l'introduction des fibres afin d'allonger le jonc. Une surlongueur des fibres par rapport aux rainures est ainsi obtenue lorsque le jonc en sortie de la ligne revient à son état initial non tendu, prêt à l'exploitation.

Les roues de tirage connues ont un petit rayon de l'ordre de 20 cm. L'expérience montre, ainsi que les calculs comme on le verra dans la suite, que ces petites roues de tirage atténuent, voire même suppriment la surlongueur recherchée des fibres, du fait que les fibres dans le jonc autour de la roue de tirage suivent un parcours plus petit que le tracé hélicoïdal du fond des rainures.

L'invention vise précisément à remédier à cet inconvénient et à fournir une ligne de câblage à fibres optiques dans laquelle la roue de tirage un rayon défini en fonction de caractéristiques dimensionnelles du jonc afin que la surlongueur des fibres recherchée demeure conservée en sortie de la roue de tirage.

A cette fin, la ligne de câblage est telle que déffinie dans la revendication 1, c'est-à-dire la roue de tirage a un rayon R' tel que:

$$R' > (p^2/(4\pi^2 r)) - (r+h)$$

où p et h sont le pas et la profondeur des rainures hélicoïdales et r le rayon d'une âme du jonc circonscrite par des fonds des rainures. De préférence, le rayon R' de la roue de tirage est de l'ordre d'un mètre ou plus.

D'autres avantages de la présente invention apparaîtront plus clairement à la lecture de la description suivante en référence aux dessins annexés correspondants dans lesquels:

- la Fig. 1 est une vue longitudinale schématique d'une ligne de câblage de fibres optiques dans un jonc rainuré;
- la Fig. 2 est une vue en perspective d'un troncon du jonc à la périphérie de la roue de tirage;
- les Figs. 3 et 4 montrent en perspective et en projections planes sur la roue une portion d'une hélice suivie par le fond d'une rainure du jonc dans un repère cartésien à trois dimensions utilisé pour le calcul du rayon de la roue de tirage selon l'invention;
- la Fig. 5 montre la variation du rayon de courbure de l'hélice en un point à proximité de la périphérie de la roue en fonction du rayon du cercle autour duquel tourne l'hélice; et
- la Fig. 6 montre la variation de la position du centre de courbure dudit point périphérique en fonction du rayon de la roue de tirage.

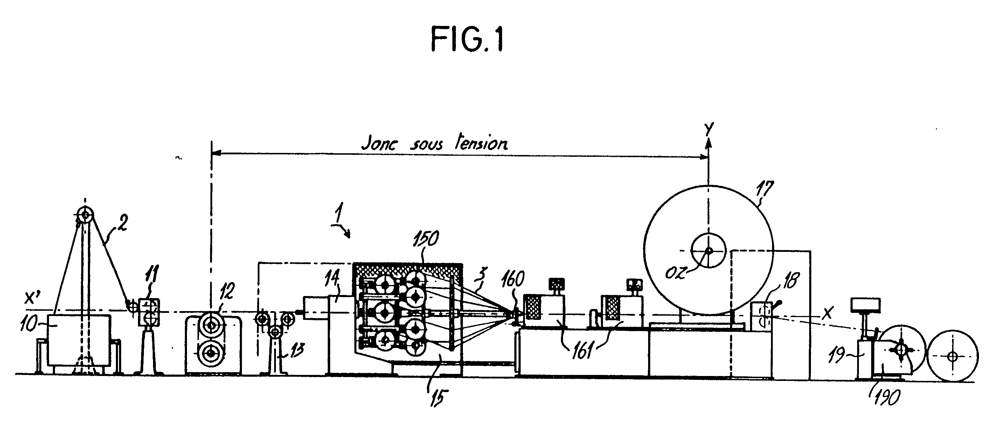

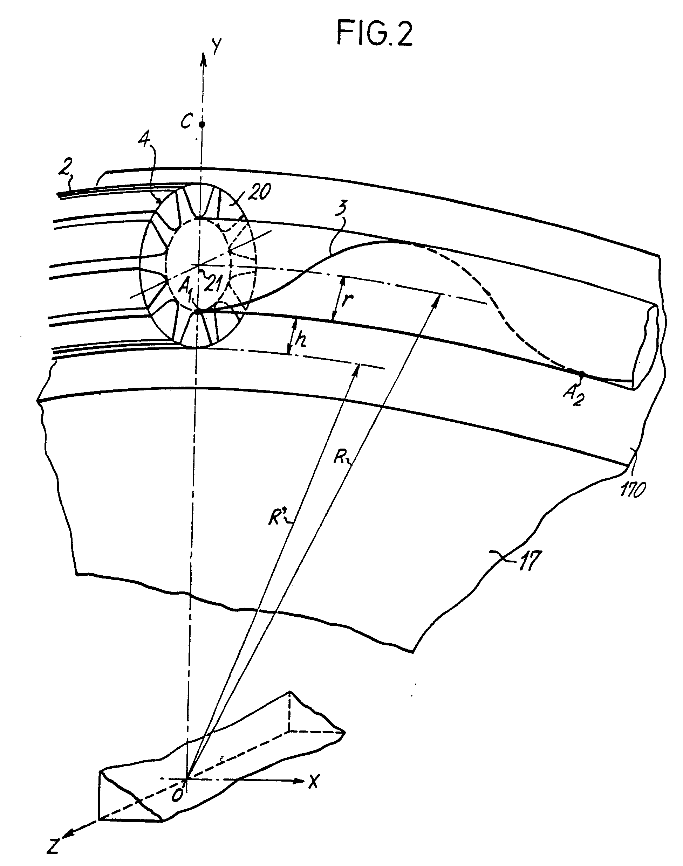

En référence à la Fig. 1, une ligne de câblage à fibres optiques 1 comprend en amont un dérouleur 10, en forme de fût vertical, qui déroule un jonc cylindrique rainuré 2 en une matière thermoplastique obtenue par extrusion, enrobant le cas échéant une armature centrale telle qu'un fil d'acier ou plusieurs fils d'acier torsadés. Le jonc 2 comporte des rainures hélicoïdales parallèles 20 équiréparties à la périphérie du jonc et propres à recevoir chacune une fibre optique 3. Le nombre de rainures 20 est égal à 10 selon la réalisation illustrée à la Fig. 2. Les rainures suivent des tracés hélicoïdaux continus parallèles ayant un pas très grand par rapport au diamètre du jonc, typiquement dans un rapport de l'ordre de 30 à 60. Les rainures peuvent comprendre successivement des troncons hélicoïdaux directs et des tronçons hélicoïdaux rétrogrades.

Le jonc 2 sortant du dérouleur 10 est déroulé entre des roues de tension 11 et passe sur une roue de freinage 12. Le jonc 2 est tiré linéairement et soumis à un effort de traction le long d'un axe horizontal X'X longitudinal à la ligne de câblage depuis la roue de freinage 12 jusqu'à une roue de tirage 17. Entre les roues 12 et 17, le jonc 2 traverse successivement un dispositif de mesure de la tension du jonc 13, un dispositif d'asservissement 14 ayant des dents engrenant dans des rainures du jonc pour asservir des vitesses de rotation d'organes tournants 15, 160 à la vitesse de translation du jonc et plus précisément au nombre de pas des rainures hélicoïdales du jonc par seconde, un support tournant 15 muni de bobines débitrices de fibre 150, un dispositif de distribution de fibres optiques tournant 160 contenant des guides-fibre pour introduire les fibres 3 dans les rainures 20 du jonc respectivement, et une ou des rubaneuses 161 pour entourer le jonc contenant les fibres par une ou des gaines de protection 4 par exemple en terphane. Le jonc enrubanné est enroulé plusieurs fois autour de la roue de tirage 17 qui est sous la forme d'un grand disque tangent à l'axe X'X et tournant autour d'un axe de rotation transversal OZ. Puis le jonc 2 passe entre des roues de contre-tension 18 et est enroulé autour d'une bobine 190 dans un dispositif enrouleur 19 en sortie de la ligne de câblage 1.

Dans la ligne de câblage, le jonc 2 est soumis à une tension entre les roues de freinage 12 et la roue de tirage 17 pendant l'introduction des fibres 3 dans les rainures 20 du jonc. En sortie de la ligne de câblage, au niveau des roues de contre-tension 18, le jonc 2 est rétracté sensiblement à sa longueur initiale. Les fibres offrent ainsi une surlongueur par rapport à la longueur des rainures 20 et suivent ainsi un tracé sinueux dans les rainures. Les fibres ne sont pas ainsi exposées à des contraintes notamment de dilatation du câble en température ou de traction au cours d'opérations ultérieures telles que lovage, pose et exploitation du câble à fibres optiques

**0 171 299**

soumettant celui-ci à des allongements par exemple.

Pour obtenir par friction une immobilisation de chaque fibre dans la rainure respective du jonc, il est nécessaire de prévoir une longueur de jonc d'environ 15 mètres en aval des guides-fibre, entre le dispositif de distribution 160 et le dispositif enrouleur 19, compte tenu des vibrations engendrées par les divers mécanismes de la ligne de câblage et de la tension appliquée aux fibres. Lorsque la fibre n'est pas encore immobilisée par frottement dans la rainure du jonc, elle est soumise à la tension de la bobine débitrice respective 150. La fibre a donc tendance à se placer sur un chemin de longueur minimum.

A priori, comme montré à la Fig. 2, la fibre 3 dans le jonc 2 enroulé autour de la roue de tirage 17 suit une hélice curviligne confondue avec le tracé du fond de la rainure correspondante 20. Toutefois, le centre de courbure de l'hélice curviligne en un point $A_1$ à proximité immédiate de la périphérie 170 de la roue de tirage 17 varie en fonction du rayon de la roue de tirage, comme cela est démontré dans la suite par un calcul de rayon de courbure au point $A_1$.

Selon la technique antérieure, le rayon de la roue de tirage est petit et inférieur à un rayon critique défini dans la suite, ce qui se traduit par un centre de courbure au point $A_1$ situé entre le centre 0 de la roue 17 et le point $A_1$. La fibre est alors plaquée tantôt sur la périphérie de la roue de tirage tantôt sur une âme 21 du jonc 2 circonscrite par les fonds des rainures 20. La longueur de l'hélice décrite par la fibre est ainsi inférieure à la longueur de l'hélice enroulée autour de l'âme du jonc seul, c'est-à-dire décrite par le fond de la rainure. Ainsi selon la technique antérieure, la fibre peut être moins longue que la rainure, ce qui provoque une tension indésirable de la fibre, qui, le cas échéant, provoque la rupture de la fibre, lorsque le jonc revient à sa longueur initiale en sortie de la ligne. Ce phénomène est contraire au but recherché, savoir une surlongueur de fibre par rapport à la rainure.

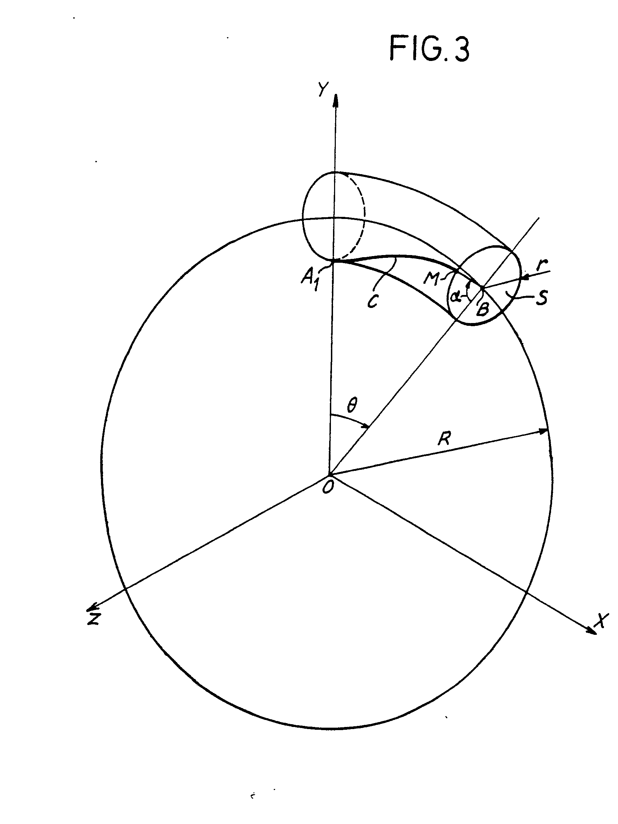

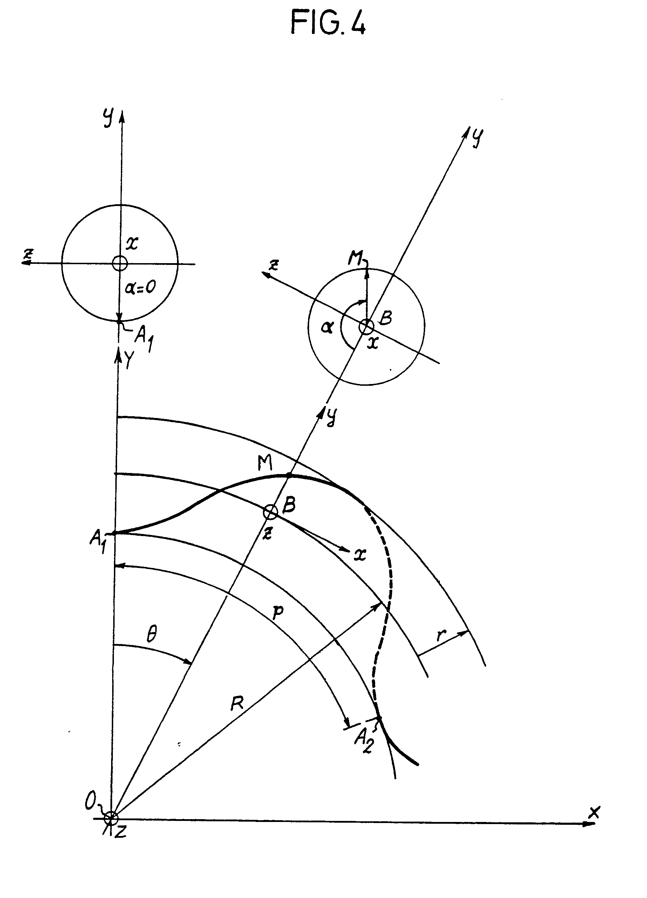

Le rayon de courbure en un point quelconque M d'une hélice curviligne C décrite par le fond d'une rainure 20 du jonc 2 enroulé autour de la roue de tirage 17 est calculé ci-après en référence aux Figs. 3 et 4. L'hélice C est axée sur la circonférence d'un cercle de rayon R dans un plan vertical XOY d'un repère cartésien XYZ. Un axe d'ordonnée OY du repère passe par le point $A_1$ de l'hélice C situé sur un petit cercle de rayon (R - r). Un axe de côté OZ du repère est confondu avec l'axe de rotation de la roue 17. L'hélice C tourne autour d'un tore défini par l'axe OZ et un rayon R = $\overline{OB}$ égal à la somme du rayon R' de la roue 17 et du rayon (r + h) du jonc 2, comme montré à la Fig. 2. Une section diamétrale S du tore contenant le point M a un rayon r égal à celui de l'âme 21 du jonc et un centre B sur le cercle de rayon R. Le point M peut être repéré par les coordonnées sphériques suivantes:

$\overline{OM}$ = distance du centre O au point M;

$\theta$ = angle entre OY et OB variant de O à $2\pi$ pour un tour complet du point M autour de la roue de tirage;

$\alpha$ = angle entre BO et BM variant entre O et $2\pi$ pour un parcours du point M égal au pas p de l'hélice C.

A partir de la relation vectorielle:

OM = OB + BM

sont déduites les coordonnées du point M dans le repère cartésien XYZ:

$$X = R \sin\theta - r \cos\alpha \sin\theta$$
$$Y = R \cos\theta - r \cos\theta \cos\alpha \tag{1}$$
$$Z = r \sin\alpha$$

Si k désigne un nombre généralement fractionnaire de pas pour un tour de l'hélice C autour de la roue de tirage 17, les angles $\alpha$ et $\theta$ sont liés par la relation:

$$\alpha = k.\theta \text{ avec } k = (2\pi R)/p$$

En remplaçant $\alpha$ dans les relations (1), on obtient:

$$X = R \sin\theta - r \cos k\theta \sin\theta$$
$$Y = R \cos\theta - r \cos\theta \cos k\theta \tag{2}$$
$$Z = r \sin k\theta$$

A partir de l'une des relations fondamentales de Frenet-Serret

$$dT / ds = N/p$$

où dT/ds désigne le taux d'accroissement d'un vecteur unitaire T tangent en un point quelconque M d'une courbe curviligne par rapport à une abscisse curviligne s mesurée à partir de ce point, N un vecteur unitaire normal à la courbe et $\rho$ un rayon de courbure de la courbe, la courbure $1/\rho$ de la courbe en M être exprimée par la formule suivante:

$$\frac{1}{\rho} = \frac{((X''^2+Y''^2+Z''^2)(X'^2+Y'^2+Z'^2) - (X'X''+Y'Y''+Z'Z'')^2)^{1/2}}{(X'^2+Y'^2+Z'^2)^{3/2}}$$

en fonction des dérivées premières X', Y', Z' et secondes X'', Y'', Z'' des coordonnées du point M par rapport à l'angle $\theta$. Ces dernières sont déduites des relations (2):

3

**0 171 299**

$X' = \frac{dX}{d\theta} = R\cos\theta + rk\sin k\theta \sin\theta - r\cos k\theta \cos\theta$

$Y' = \frac{dY}{d\theta} = -R\sin\theta + r\sin\theta \cos k\theta + rk\cos\theta \sin k\theta$

$Z' = \frac{dZ}{d\theta} = rk\cos k\theta$

$X'' = \frac{d^2X}{d\theta^2} = -R\sin\theta + rk(k\cos k\theta \sin\theta + \sin k\theta \cos\theta) + r(k\sin k\theta \cos\theta + \sin\theta \cos k\theta)$

$Y'' = \frac{d^2Y}{d\theta^2} = -R\cos\theta + r(\cos\theta \cos k\theta - k\sin k\theta \sin\theta) - rk(\sin\theta \sin k\theta - k\cos\theta \cos k\theta)$

$Z'' = \frac{d^2Z}{d\theta^2} = -rk^2\sin k\theta$

Pour des points $A_1$, $A_2$,... situés sur des cercles de rayon $(R - r)$ et en vis-à-vis de la périphérie 170 de la roue de tirage, et donc définis pour $\alpha = 2\pi N$ et $\theta = (Np)/R$, où N est un entier supérieur ou égal à zéro, les variables précédentes sont égales à:

$X' = (R - r)\cos\theta$ $\qquad X'' = (-R + r(1 + k^2))\sin\theta$

$Y' = (-R + r)\sin\theta$ $\qquad Y'' = (-R + r(1 + k^2))\cos\theta$

$Z' = rk$ $\qquad Z'' = 0$

La courbure de l'hélice C aux points $A_1$, $A_2$ est alors:

$\frac{1}{\rho} = \frac{r(1+k^2) - R}{(R-r)^2 + k^2 r^2}$

En remplaçant k par $(2\pi R/p)$, et en posant $b = 4\pi^2/p^2$, le rayon de courbure correspondant est donné par l'équation suivante en fonction du rayon R et donc en fonction du rayon de la roue de tirage:

$\rho = \frac{R^2(1 + br^2) - 2rR + r^2}{R^2 \cdot br - R + r}$

Le rayon de courbure $\rho$ tend vers l'infini pour des valeurs:

$R = \frac{1 + \sqrt{1 - 4br^2}}{2br}$

En pratique, le terme $4br^2$ est très inférieur à l'unité, si bien que le rayon de courbure $\rho$ tend vers l'infini pour un rayon critique:

$R_0 = p^2/(4\pi^2 r)$

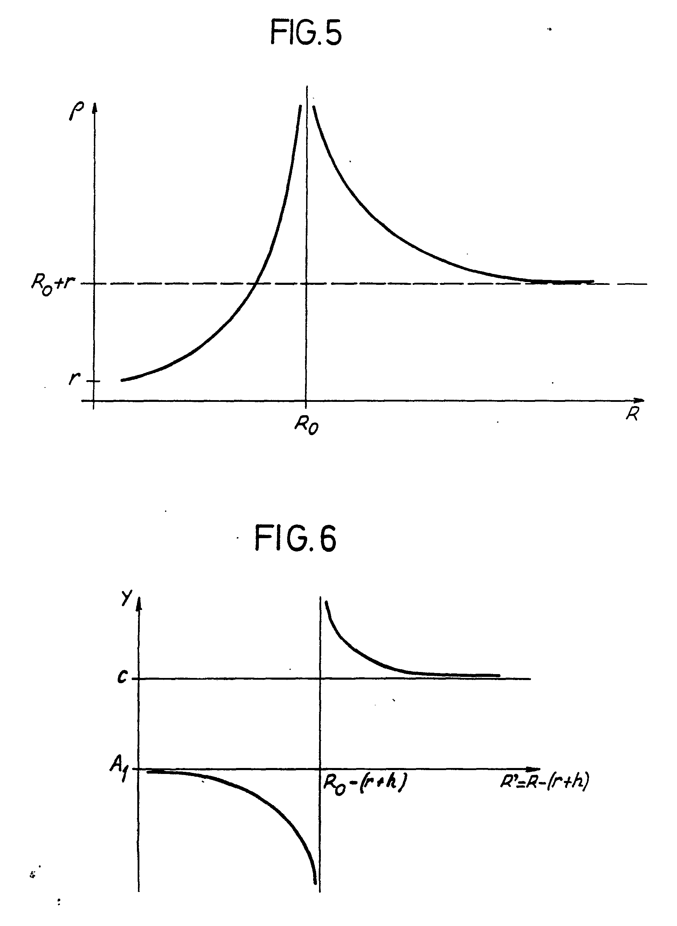

comme montré à la Fig 5. Lorsque le rayon R tend vers l'infini, on retrouve le rayon de courbure d'une hélice circulaire égale à

$p^2/(4\pi^2 r) + r = R_0 + r$.

La Fig. 6 montre la variation de la position du centre de courbure de l'hélice au point $A_1$ sur l'axe OY en fonction du rayon R' de la roue de tirage 17 tel que $R' = R - (r + h)$. h désigne la profondeur des rainures 20 et $(r + h)$ le rayon du jonc 2. Lorsque $R' < R_0 - (r + h)$, le centre de courbure est situé sur la demi-droite orientée $A_1 0$ du côté du centre 0 de la roue et les fibres 3 dans les rainures 20 viennent s'appliquer contre la périphérie de la roue de tirage, ce qui correspond à une roue de tirage selon la technique antérieure. Lorsque $R' > R_0 - (r + h)$, ce qui correspond à une roue de tirage selon l'invention, le centre de courbure est au-delà du point $A_1$, sur une demi-droite orientée CY ayant pour origine un point C distant de $R_0 - h$ par rapport au point $A_1$. Selon l'invention, les fibres 3 sont plaquées contre les fonds des rainures 20 et donc présenteront une surlongueur par rapport aux rainures après la cessation de la tension exercée sur le jonc en sortie de la chaîne de câblage.

A titre d'exemple, si le pas maximum des rainures du jonc 2 est égal à 200 mm, le rayon minimum de l'âme 21 du jonc est égal à 1,1 mm et la profondeur maximale des rainures 20 est égale à 0,9 mm, le rayon de la roue de tirage R' doit être tel que:

$R' > R'_0 = (\frac{200^2}{4\pi^2 \cdot 1,1} - (1,1 + 0,9)$ mm

soit $R' > 919$ mm.

En pratique, le rayon d'une roue de tirage selon l'invention est de l'ordre d'un mètre.

**0 171 299**

## Revendications

1. Ligne de câblage à fibres optiques (1) dans laquelle défile un jonc (2) ayant des rainures hélicoïdales (20) propres à recevoir chacune au moins une fibre optique (3), ladite ligne comprenant, en amont, des moyens (12) pour freiner le jonc (2) et des moyens (150, 160) pour introduire les fibres (1) dans les rainures (20) du jonc, et en aval, une roue de tirage (17) autour de laquelle s'enroule le jonc rainuré (2) pourvu des fibres optiques introduites (3), caractérisée en ce que ladite roue de tirage (17) a un rayon R' tel que:

$$R' > (p^2/(\pi^2 r)) - (r+h)$$

où p et h sont le pas et la profondeur des rainures hélicoïdales (20) et r le rayon d'une âme (21) du jonc (2) circonscrite par des fonds des rainures.

2. Ligne de câblage conforme à la revendication 1, caractérisée en ce que le rayon R' de la roue (17) est de l'ordre d'un mètre ou plus.

## Patentansprüche

1. Kabelleitung mit optischen Fasern (1), in der eine Stange (2) abläuft, die zur Aufnahme jeweils mindestens einer optischen Faser (3) geeignete schraubenförmige Nuten (20) aufweist, wobei die Leitung stromaufwärts Mittel (12) zum Bremsen der Stange (2) und Mittel (150, 160) zum Einführen der Fasern (3) in die Nuten (20) der Stange und stromabwärts ein Abzugrad (17) aufweist, um das sich die mit eingeführten optischen Fasern (3) versehene genutete Stange (2) aufwickelt, dadurch <u>gekennzeichnet</u>, daß das Abzugrad (17) einen Radius R' aufweist wie:

$$R' > (p^2/(4\pi^2 r)) - (r+h)$$

wo p und h die Ganghöhe und die Tiefe der schraubenförmigen Nuten (20) und r der Radius einer Seele (21) der Stange (2) sind, die durch Böden der Nuten umschrieben ist.

2. Kabelleitung nach Anspruch 1, dadurch <u>gekennzeichnet</u>, daß der Radius R' des Rads (17) in der Große eines Meters oder mehr ist.

## Claims

1. Optical fiber cabling line (1) wherein a ring (2) having helical grooves (20) designed to each receive at least one optical fiber (3) runs, said line comprising, upstream, means (12) for braking the ring (2) and means (150, 160) for introducing the fibers (3) into the ring grooves (20), and dowstream, a drawing wheel (17) around which the grooved ring (2) containing introduced optical fibers (3) is wound, characterized in that said drawing wheel (17) has a radius R' such that

$$R' > (p^2/(4\pi^2 r)) - (r+h)$$

where p and h are the pitch and the depth of the helical grooves (20), and r the radius of a central portion (21) of the ring (2) circumscribed by bottoms of the grooves.

2. Cabling line according to claim 1, characterized in that the radius R' of the wheel (17) is on the order of one metre or more.

5

# FIG.1

Jonc sous tension

0 171 299

# FIG.2

# FIG.3

FIG. 4

0 171 299

7

# FIG.5

# FIG.6